# EUROPEAN PATENT SPECIFICATION

(11) **EP 4 376 175 B1**
(45) Date of publication and mention of the grant of the patent: **11.02.2026**
(21) Application number: 23792162.2
(22) Date of filing: 19.04.2023
(51) Int. Cl.: H01M 10/6567, H01M 10/6568, H01M 10/6569, H01M 10/643, H01M 10/613, H01M 50/253, H01M 50/213, H01M 50/383

(54) **CAN-TYPE BATTERY MODULE INCLUDING IMMERSION COOLING UNIT**
CAN-BATTERIEMODUL MIT TAUCHKÜHLEINHEIT
MODULE DE BATTERIE DE TYPE BAC DOTÉ D'UNITÉ DE REFROIDISSEMENT PAR IMMERSION

(30) Priority: 19.04.2022 KR 20220048420
(43) Date of publication of application: 29.05.2024
(73) Proprietor: LG Energy Solution, Ltd., Seoul 07335 (KR)
(72) Inventor: RYU, Jae Uk, Daejeon 34122 (KR); CHI, Ho June, Daejeon 34122 (KR); KANG, Jae Hyuk, Daejeon 34122 (KR); CHOI, Jin Young, Daejeon 34122 (KR)
(74) Representative: Plasseraud IP
(86) International application number: PCT/KR2023/005284
(87) International publication number: WO 2023/204588

(56) References cited:
- FR-A1- 2 903 058
- KR-A- 20160 043 761
- KR-A- 20190 026 237
- KR-A- 20200 111 353
- KR-A- 20220 014 027
- US-A1- 2014 308 550
- US-A1- 2014 308 550
- US-A1- 2016 172 727
- US-A1- 2018 316 074
- US-A1- 2020 106 143

## Description

### [Technical Field]

The present invention relates to a can-shaped battery module including a liquid immersion cooling unit. More particularly, the present invention relates to a can-shaped battery module including a cylindrical battery cell or a prismatic battery cell, wherein a part of the cylindrical battery cell or the prismatic battery cell is immersed in a cooling liquid, and the can-shaped battery module includes a liquid immersion cooling unit through which the cooling liquid is circulated.

### [Background Art]

Depending on the shape of a battery case, lithium secondary batteries are classified into a cylindrical secondary battery, configured to have a structure in which an electrode assembly is mounted in a cylindrical metal can, a prismatic secondary battery, configured to have a structure in which an electrode assembly is mounted in a prismatic metal can, and a pouch-shaped secondary battery, configured to have a structure in which an electrode assembly is mounted in a pouch-shaped case made of an aluminum laminate sheet. Thereamong, the cylindrical secondary battery has advantages of a relatively large capacity and structural safety.

The cylindrical secondary battery includes a jelly-roll type electrode assembly mounted in a cylindrical battery case, and the jelly-roll type electrode assembly is manufactured by winding a long sheet type positive electrode and a long sheet type negative electrode in the state in which a separator is interposed therebetween. The wound electrode assembly is inserted into the can, a top cap assembly is coupled to an upper part of the can, and sealing is performed, whereby the cylindrical secondary battery is completed.

In many devices, a battery cell is not used alone, and a battery module including a plurality of battery cells coupled to each other or a battery pack including a plurality of battery modules coupled to each other is used.

In order to manufacture a battery module having high energy density, it is necessary to reduce an inner space of the battery module. To this end, the battery cells must be disposed in tight contact with each other. In this case, parts of the battery cell that are completely exposed to the outside are only an upper surface and a lower surface.

In order to cool the battery module, a heat sink is disposed at an upper part or a lower part of the can-shaped battery cell such that heat is discharged from the battery cell by conduction. The heat sink may be disposed at a side surface of the battery cell. In this case, however, the volume of the battery module is increased, which runs counter to technology for manufacturing a battery module having high energy density.

The area of the upper part and the lower part of the cylindrical or prismatic battery cell, which are exposed to the outside, is merely about 10% of the overall area of the battery cell. The side surface of the battery cell, from which heat is mainly generated during charging and discharging of the battery cell, is blocked by an adjacent battery cell.

As described above, conventional heat sink cooling has a fundamental problem in that cooling efficiency is very low and it is impossible to structurally cope with generation of high temperatures. In order to improve efficiency of the heat sink by conduction even a little bit, a coolant may be brought into contact with the heat sink. However, there is a limit to cope with generation of high temperatures due to fundamental structural restrictions.

Patent Document 1 discloses a battery module in which a plurality of battery cells 30 is disposed, wherein a support tray 40 partitions an upper part and a lower part of each of the battery cells 30 into space S2 and space S, and liquid, which is a cooling medium, is disposed in space S under the support tray 40. The support tray 40 wraps a side surface of each of the battery cells while substantially individually supporting the battery cell, which is merely enlargement of the conventional heat sink to the overall area of the battery. In this case, a lot of space is taken up, and heat transfer is performed first through the heat sink, whereby energy density is low, cooling efficiency is limited, and structure is complicated.

In Patent Document 2, a plurality of secondary batteries is disposed in a state of being isolated from each other by a partition wall 32. Patent Document 2 discloses technology for preventing diffusion of harmful gas generated in the battery, which is not related to cooling. In addition, technology using a cooling liquid is not applicable.

Therefore, there is a need for an improved solution capable of improving cooling efficiency and stability of a battery module including a plurality of battery cells, particularly a battery module in which battery cells are disposed in tight contact with each other in order to improve energy density while overcoming spatial restrictions thereof.

### (Patent Documents)

Japanese Patent Application Publication No. 2014-89822 ("Patent Document 1")
Japanese Patent Application Publication No. 2010-192209 ("Patent Document 2")
Document US 2018/316074 A1 relates to a temperature-control device for a battery system, having a cuboid-shaped hollow body with at least one connection device for supplying and at least one connection device for discharging a separately temperature-controlled fluid, a plurality of regularly arranged and identically formed openings extending from a first body surface to a second body surface, wherein a cylindrical battery cell is accommodated by each opening, so that a fluid-tight liquid space is formed.

### [Disclosure]

### [Technical Problem]

The present invention has been made in view of the above problems, and it is an object of the present invention to provide a novel battery module or battery pack configured such that a plurality of battery cells having high energy density is disposed in tight contact with each other, wherein cooling performance and stability are improved.

### [Technical Solution]

In order to accomplish the above object, the present invention provides a battery module including two or more battery cells, an inner partition wall configured to partition each of the battery cells into an upper part and a lower part, and a cooling liquid disposed above or under the inner partition wall, wherein the inner partition wall includes a battery cell hole configured to allow the battery cells to be fitted therein so as to be fixed thereto, a through-hole formed through the inner partition wall, and a safe sealing portion configured to close the through-hole and to open when the temperature in the battery module rises abnormally or flames are generated in the battery module.

The battery cells may be vertically disposed in the battery module, and the inner partition wall may be the formed in the shape of a plate and may be horizontally disposed. Each of the battery cells is a cylindrical battery cell or a prismatic battery cell.

The inner partition wall may include a support layer configured to not be deformed by heat and to maintain the overall shape of the inner partition wall, which is formed in a plate shape, a sealing portion layer configured to seal the circumference of each of the battery cells disposed in the battery cell hole and a safe sealing portion layer including the safe sealing portion.

The support layer may be necessarily provided as a separate layer and may be disposed over the entirety of the interior of the battery module. The support layer may be made of at least one selected from the group consisting of polyolefin, metal, and ceramic.

At least two of the support layer, the sealing portion layer, and the safe sealing portion layer may be disposed on one layer.

The sealing portion layer may be provided as a separate layer and may be disposed on or under the support layer, or may be constituted by an elastic material provided only at the circumference of the battery cell hole. The safe sealing portion layer may be provided as a separate layer and may be disposed on or under the support layer, may be provided only at the through-hole or the circumference thereof, or may close a through-hole provided in the support layer at the same height as the support layer.

As another example, the inner partition wall may be configured to have three layers, such as a support layer, a sealing portion layer, and a safe sealing portion layer.

The safe sealing portion may include a material that is melted at an abnormal temperature of the battery cell or higher, and the material that is configured to melt at the abnormal temperature of the battery cell or higher may be at least one selected from the group consisting of a polyolefin, a silicone, and a urethane. Specifically, polyolefin may be PE, PP, or PC.

It is preferable for the cooling liquid to cool the battery cell or discharge a flame retardant material at the abnormal temperature of the battery cell or higher while not corroding the battery cell, particularly a battery cap.

The cooling liquid may be a flame retardant material, and the flame retardant material may be at least one selected from the group consisting of water, a hydrofluoroether (HFE), a fluoro ketone, ethylene glycol, and an insulating oil.

The insulating oil may include at least one of electric transformer oil, electric circuit breaker oil, electric condenser oil, and power cable oil.

Meanwhile, the cooling liquid may include a material that is configured to evaporate or decompose at the abnormal temperature of the battery cell or higher, so as to discharge gas. Specifically, the cooling liquid may be evaporated or decomposed at the abnormal temperature of the battery cell or higher and may discharge flame retardant gas including carbon dioxide.

The sealing portion layer may include a silicone or a polyurethane, and any material that exhibits elasticity while not reacting with an electrolytic solution may be used as the sealing portion layer.

The battery module may include an inlet and outlet port configured to allow the cooling liquid to be introduced or discharged therethrough in a lower part of the battery module, and the cooling liquid may be circulated through the inlet and outlet port.

The battery cell may have no separate coating layer or resin layer provided at the outside thereof. The outside of a metal cylindrical can or prismatic can may be in direct contact with the cooling liquid with no separate coating layer or resin layer, whereby it is possible to improve thermal conduction efficiency.

In addition, the present invention provides a battery pack including the battery module and a device including the battery module.

Here, the battery pack may include a battery pack substantially including no battery module. That is, the battery module according to the present invention may directly constitute a battery pack.

In addition, the present invention may provide combinations of the above solving means.

### [Advantageous Effects]

The present invention is capable of providing a battery module having high safety while having high energy density. The battery module according to the present invention is configured such that battery cells are disposed in tight contact with each other; however, cooling performance of the battery module according to the present invention is higher than cooling performance of a conventional battery module, whereby overheating of the battery cells is prevented. In addition, when the temperature in the battery module rises or flames are generated in the battery module, a safe sealing portion is opened, whereby a cooling liquid may reduce the temperature in the battery module or may inhibit flames.

### [Description of Drawings]

FIG. 1 is a sectional schematic view of a battery module according to the present invention.
FIG. 2 is a sectional schematic view showing before and after a safe sealing portion of the battery module according to the present invention is melted.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module according to the present invention will be described.

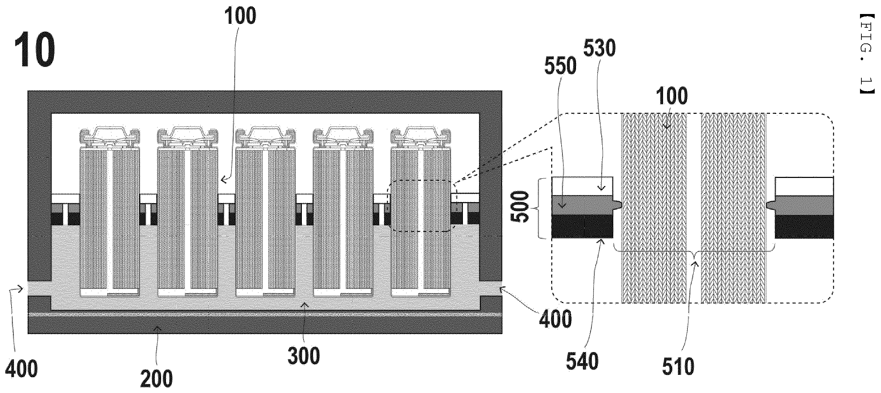

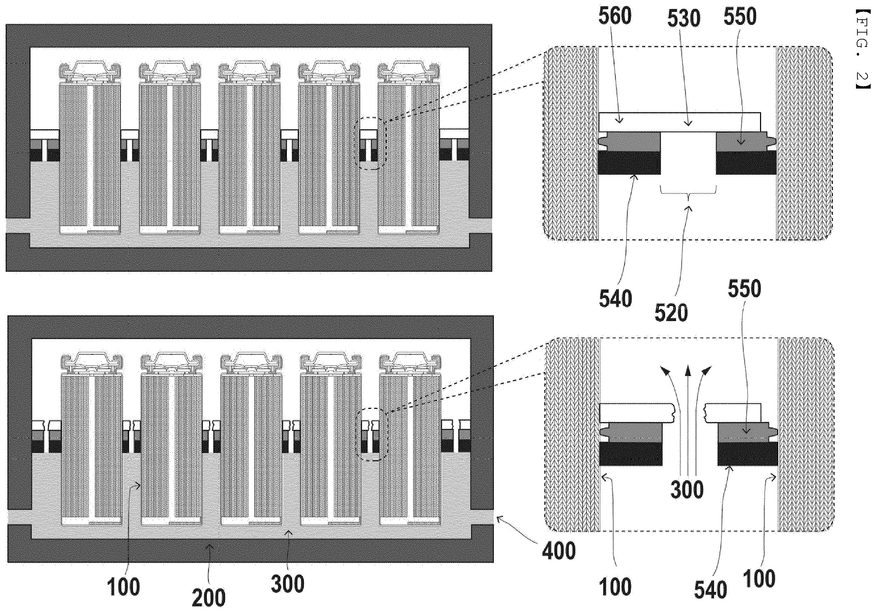

FIG. 1 is a sectional schematic view of a battery module according to the present invention, and FIG. 2 is a sectional schematic view showing before and after a safe sealing portion of the battery module according to the present invention is melted.

Referring to FIGs. 1 and 2, the battery module 10 according to the present invention may be a battery module 10 including two or more battery cells 100, an inner partition wall 500 configured to partition each of the battery cells 100 into an upper part and a lower part, and a cooling liquid 300 disposed under the inner partition wall 500, wherein the inner partition wall 500 may include a battery cell hole 510 configured to allow each of the battery cells 100 to be fitted therein so as to be fixed thereto, a through-hole 520 formed through the inner partition wall 500, and a safe sealing portion 530 configured to close the through-hole 520.

Although the cooling liquid 300 is shown as being disposed under the inner partition wall in FIGs. 1 and 2, the cooling liquid 300 may be disposed above the inner partition wall when the upper part of each of the battery cells 100 constitutes a main heat generation portion.

The battery cells 100 may be vertically disposed in the battery module 10, and the inner partition wall 500 may be formed in the shape of a plate and may be horizontally disposed. FIGs. 1 and 2 show cylindrical battery cells by way of example; however, the present invention is not limited thereto.

A sealing portion layer 550 presses each of the battery cells in order to seal the battery cell. Although the kind of the battery cell 100 is not limited, the battery cell must exhibit external strength sufficient to be sealed by pressing.

The inner partition wall 500 may include a support layer 540 configured to not be deformed by heat and to maintain the overall shape of the inner partition wall 500, which is formed in a plate shape, a sealing portion layer 550 configured to seal the circumference of each of the battery cells 100 disposed in the battery cell hole 510, and a safe sealing portion layer 560 including the safe sealing portion 530. Dotted parts of FIGs. 1 and 2 are enlarged detail views. A projecting part of the sealing portion layer 550 is shown as being sealed in contact with the battery cell 100. Although only one projecting part is shown in the figures, sealing may be performed by one or more projecting parts in consideration of a sealing mechanism.

The inner partition wall 500 must exhibit rigidity sufficient to fix the battery cells 100 when a product using the battery module is abruptly moved or transported. In addition, the support layer 540, the sealing portion layer 550 configured to seal the circumference of each of the battery cells 100 disposed in the battery cell hole 510, and the safe sealing portion layer 560 including the safe sealing portion 530 must be neither deformed by the cooling liquid 300 nor react with the cooling liquid.

The sealing portion layer 550 may include silicone or polyurethane, and any material that exhibits elasticity while not reacting with an electrolytic solution may be used as the sealing portion layer.

The support layer 540 is necessarily provided as a separate layer and is disposed over the entirety of the interior of the battery module. The support layer 540 may be made of at least one selected from the group consisting of polyolefin, metal, ceramic, and reinforced plastic.

The support layer 540 is a separate component different from an outer wall constituting the battery module, and partitions each of the battery cells 100 disposed in the battery module into an upper part and a lower part.

When the battery cell 100 is a cylindrical battery, the outside of a can-shaped metal may be used without tubing. In this case, however, a problem may occur when the support layer 540 comes into contact with the battery cell 100. Consequently, it is preferable to use ceramic, polyolefin, or reinforced plastic, rigidity of which is maintained while electricity is not allowed to flow therein, instead of metal.

The sealing portion layer 550 is provided as a separate layer, and is disposed on the support layer 540. The safe sealing portion layer 560 is also provided as a separate layer, and is disposed on the sealing portion layer 550. The inner partition wall 500 shown in FIGs. 1 and 2 is formed so as to have three layers, i.e. the support layer 540, the sealing portion layer 550, and the safe sealing portion layer 560.

FIGs. 1 and 2 show an example, and the support layer 540, the sealing portion layer 550, and the safe sealing portion layer 560 may be deformed in a state of being stacked in the order different from the order shown in FIGs. 1 and 2. In another modification, the sealing portion layer 550 and the safe sealing portion layer 560 may not be disposed as separate layers but may be disposed in the same plane as the support layer 540, unlike FIGs. 1 and 2. In this case, a structure to seal the circumference of the battery cell hole 510 provided in the support layer 540 and the battery cell 100 and a structure to fill the through-hole 520 may be provided.

One layer described above and a plurality of layers may be mixed. Only one of the sealing portion layer 550 and the safe sealing portion layer 560 may be disposed as a separate layer, and the other may be disposed in the same plane as the support layer 540.

The safe sealing portion 530 may include a material that is melted at an abnormal temperature of the battery cell 100 or higher. Specifically, at least one selected from the group consisting of polyolefin, silicone, and urethane may be used. Specifically, polyolefin may be PE, PP, or PC.

The cooling liquid 300 may be a flame retardant material. Specifically, at least one selected from the group consisting of water, hydrofluoroether (HFE), fluoro ketone, and ethylene glycol.

When the temperature of the battery module increases to a temperature at which the safe sealing portion 530 can be melted (the lower figure of FIG. 2), the safe sealing portion 530 is melted and the inner partition wall 500 is opened, whereby the cooling liquid 300 is evaporated. Consequently, it is possible to reduce the temperature in the battery module or to inhibit flames.

The battery module 10 may be provided in a lower part thereof with an inlet and outlet port 400 configured to allow the cooling liquid 300 to be introduced or discharged therethrough, and the cooling liquid 300 may be circulated through the inlet and outlet port 400. The cooling liquid 300 may be circulated by a separate pump (not shown).

Those skilled in the art to which the present invention pertains will appreciate that various applications and modifications are possible within the scope of the present invention as defined by the appended claims.

### (Description of Reference Numerals)

- 10:: Battery module according to present invention
- 100:: Battery cell
- 200:: Battery module case
- 300:: Cooling liquid
- 400:: Inlet and outlet port
- 500:: Inner partition wall
- 510:: Battery cell hole
- 520:: Through-hole
- 530:: Safe sealing portion
- 540:: Support layer
- 550:: Sealing portion layer
- 560:: Safe sealing portion layer

## Claims

1. A battery module (10) comprising:
two or more battery cells (100);
an inner partition wall (500) configured to partition each of the battery cells (100) into an upper part and a lower part; and
a cooling liquid (300) disposed above or under the inner partition wall (500), wherein
the inner partition wall (500) comprises:
a battery cell hole (510) configured to allow the battery cells (100) to be fitted therein, so as to be fixed thereto;
a through-hole (520) formed through the inner partition wall (500); and
a safe sealing portion (530) configured to close the through-hole (520), wherein the safe sealing portion (530) is configured to open when the temperature in the battery module rises abnormally or flames are generated in the battery module.

2. The battery module (10) according to claim 1, wherein each of the battery cells (100) is a cylindrical battery cell or a prismatic battery cell.

3. The battery module (10) according to claim 1, wherein the inner partition wall (500) comprises:
a support layer (540) configured to not be deformed by heat and to maintain an overall shape of the inner partition wall (500), the inner partition wall (500) being formed in a plate shape;
a sealing portion layer (550) configured to seal a circumference of each of the battery cells (100) disposed in the battery cell hole (510); and
a safe sealing portion layer (560) comprising the safe sealing portion (530).

4. The battery module (10) according to claim 1, wherein the safe sealing portion (530) comprises a material that is configured to melt at an abnormal temperature of the battery cell (100) or higher.

5. The battery module (10) according to claim 4, wherein the material that is melted at the abnormal temperature of the battery cell (100) or higher is at least one selected from a group consisting of a polyolefin, a silicone, and a urethane.

6. The battery module (10) according to claim 1, wherein the cooling liquid (300) is a flame retardant material.

7. The battery module (10) according to claim 6, wherein the flame retardant material is at least one selected from a group consisting of water, a hydrofluoroether (HFE), a fluoro ketone, ethylene glycol, and an insulating oil.

8. The battery module (10) according to claim 1, wherein the cooling liquid (300) comprises a material that is configured to evaporate or decompose at an abnormal temperature of the battery cell (100) or higher, so as to discharge gas.

9. The battery module (10) according to claim 3, wherein the sealing portion layer (550) comprises a silicone or a polyurethane.

10. The battery module (10) according to claim 3, wherein at least one of the sealing portion layer (550) and the safe sealing portion layer (550) may be disposed in the same plane as the support layer (540).

11. The battery module (10) according to claim 1, wherein further comprising an inlet and outlet port (400) configured to allow the cooling liquid to be introduced or discharged therethrough.

12. The battery module (10) according to claim 1, wherein the battery cell (100) is in direct contact with the cooling liquid (300).

13. A battery pack comprising the battery module (10) according to any one of claims 1 to 12.

## Patentansprüche

1. Batteriemodul (10), umfassend:
zwei oder mehr Batteriezellen (100);
eine innere Trennwand (500), welche dazu eingerichtet ist, jede der Batteriezellen (100) in einen oberen Teil und einen unteren Teil zu trennen; und
eine Kühlflüssigkeit (300), welche über oder unter der inneren Trennwand (500) angeordnet ist, wobei
die innere Trennwand (500) umfasst:
ein Batteriezellenloch (510), welches dazu eingerichtet ist, den Batteriezellen (100) zu ermöglichen, darin eingebaut zu werden, so dass diese darin fixiert sind;
ein Durchgangsloch (520), welches durch die innere Trennwand (500) ausgebildet ist; und
einen Sicherheitsdichtungsabschnitt (530), welcher dazu eingerichtet ist, das Durchgangsloch (520) zu verschließen, wobei der Sicherheitsdichtungsabschnitt (530) dazu eingerichtet ist, zu öffnen, wenn die Temperatur in dem Batteriemodul außergewöhnlich steigt oder Flammen in dem Batteriemodul generiert werden.

2. Batteriemodul (10) nach Anspruch 1, wobei jede der Batteriezellen (100) eine zylindrische Batteriezelle oder eine prismatische Batteriezelle ist.

3. Batteriemodul (10) nach Anspruch 1, wobei die innere Trennwand (500) umfasst:
eine Stützschicht (540), welche dazu eingerichtet ist, nicht durch Hitze verformt zu werden und eine Gesamtform der inneren Trennwand (500) aufrechtzuhalten, wobei die innere Trennwand (500) in einer Plattenform ausgebildet ist,
eine Dichtungsabschnittsschicht (550), welche dazu eingerichtet ist, einen Umfang von jeder der Batteriezellen (100) abzudichten, welchen in dem Batteriezellenloch (510) angeordnet sind; und
eine Sicherheitsdurchgangsabschnittsschicht (560), welche den Sicherheitsdurchgangsabschnitt (530) umfasst.

4. Batteriemodul (10) nach Anspruch 1, wobei der Sicherheitsdurchgangsabschnitt (530) ein Material umfasst, welches dazu eingerichtet ist, bei einer außergewöhnlichen Temperatur oder einer höheren Temperatur der Batteriezelle (100) zu schmelzen.

5. Batteriemodul (10) nach Anspruch 4, wobei das Material, welches bei der außergewöhnlichen Temperatur oder der höheren Temperatur der Batteriezelle (100) geschmolzen wird, wenigstens eines ist, welches aus einer Gruppe ausgewählt ist, welche aus einem Polyolefin, einem Silikon und einem Urethan besteht.

6. Batteriemodul (10) nach Anspruch 1, wobei die Kühlflüssigkeit (300) ein flammhemmendes Material ist.

7. Batteriemodul (10) nach Anspruch 6, wobei das flammhemmende Material wenigstens eines ist, welches aus einer Gruppe ausgewählt ist, welche aus Wasser, einem Hydrofluorether (HFE), einem Fluorketon, einem Ethylenglykol und einem isolierenden Öl besteht.

8. Batteriemodul (10) nach Anspruch 1, wobei die Kühlflüssigkeit (300) ein Material umfasst, welches dazu eingerichtet ist, bei einer außergewöhnlichen Temperatur oder einer höheren Temperatur der Batteriezelle (100) derart zu verdampfen oder sich derart zu zersetzen, um ein Gas abzugeben.

9. Batteriemodul (10) nach Anspruch 3, wobei die Dichtungsabschnittsschicht (550) ein Silikon oder ein Polyurethan umfasst.

10. Batteriemodul (10) nach Anspruch 3, wobei wenigstens eine aus der Dichtungsabschnittsschicht (550) und der Sicherheitsdichtungsabschnittsschicht (550) in der gleichen Ebene wie die Stützschicht (540) angeordnet sein kann.

11. Batteriemodul (10) nach Anspruch 1, wobei dieses ferner einen Einlass- und Auslassanschluss (400) umfasst, welcher dazu eingerichtet ist, der Kühlflüssigkeit zu ermöglichen, durch diesen eingeleitet oder abgeführt zu werden.

12. Batteriemodul (10) nach Anspruch 1, wobei die Batteriezelle (100) in einem direkten Kontakt mit der Kühlflüssigkeit (300) steht.

13. Batteriepack, umfassend das Batteriemodul (10) nach einem der Ansprüche 1 bis 12.

## Revendications

1. Module de batterie (10) comprenant :
deux cellules de batterie (100) ou plus ;
une paroi de séparation interne (500) configurée pour diviser chacune des cellules de batterie (100) en une partie supérieure et une partie inférieure ; et
un liquide de refroidissement (300) disposé au-dessus ou sous la paroi de séparation interne (500), dans lequel
la paroi de séparation interne (500) comprend :
un trou de cellule de batterie (510) configuré pour permettre l'installation des cellules de batterie (100) afin qu'elles y soient fixées ;
un trou traversant (520) formé à travers la paroi de séparation interne (500) ; et
une portion d'étanchéité sûre (530) configurée pour fermer le trou traversant (520), dans lequel la portion d'étanchéité sûre (530) est configurée pour s'ouvrir lorsque la température dans le module de batterie augmente de manière anormale ou que des flammes se forment dans le module de batterie.

2. Module de batterie (10) selon la revendication 1, dans lequel chacune des cellules de batterie (100) est une cellule de batterie cylindrique ou une cellule de batterie prismatique.

3. Module de batterie (10) selon la revendication 1, dans lequel la paroi de séparation interne (500) comprend :
une couche de support (540) configurée pour ne pas se déformer sous l'effet de la chaleur et pour maintenir une forme générale de la paroi de séparation interne (500), la paroi de séparation interne (500) étant formée sous la forme d'une plaque ;
une couche de portion d'étanchéité (550) configurée pour étanchéifier une circonférence de chacune des cellules de batterie (100) situées dans le trou de cellule de batterie (510) ; et
une couche de portion d'étanchéité sûre (560) comprenant la portion d'étanchéité sûre (530).

4. Module de batterie (10) selon la revendication 1, dans lequel la portion d'étanchéité sûre (530) comprend un matériau qui est configuré pour fondre à une température anormale de la cellule de batterie (100) ou plus élevée.

5. Module de batterie (10) selon la revendication 4, dans lequel le matériau qui fond à la température anormale de la cellule de batterie (100) ou plus élevée est au moins l'un choisi dans un groupe constitué d'une polyoléfine, d'un silicone et d'un uréthane.

6. Module de batterie (10) selon la revendication 1, dans lequel le liquide de refroidissement (300) est un matériau ignifuge.

7. Module de batterie (10) selon la revendication 6, dans lequel le matériau ignifuge est au moins l'un choisi dans un groupe constitué d'eau, d'un hydrofluoroéther (HFE), d'une fluorocétone, d'éthylène glycol et d'une huile isolante.

8. Module de batterie (10) selon la revendication 1, dans lequel le liquide de refroidissement (300) comprend un matériau qui est configuré pour s'évaporer ou se décomposer à une température anormale de la cellule de batterie (100) ou plus élevée, de manière à évacuer du gaz.

9. Module de batterie (10) selon la revendication 3, dans lequel la couche de portion d'étanchéité (550) comprend un silicone ou un polyuréthane.

10. Module de batterie (10) selon la revendication 3, dans lequel au moins l'une de la couche de portion d'étanchéité (550) et de la couche de portion d'étanchéité sûre (550) peut être située dans le même plan que la couche de support (540).

11. Module de batterie (10) selon la revendication 1, dans lequel il comprend en outre un orifice d'entrée et de sortie (400) configuré pour permettre l'introduction ou l'évacuation du liquide de refroidissement à travers celui-ci.

12. Module de batterie (10) selon la revendication 1, dans lequel la cellule de batterie (100) est en contact direct avec le liquide de refroidissement (300).

13. Bloc-batterie comprenant le module de batterie (10) selon l'une quelconque des revendications 1 à 12.
